# EUROPEAN PATENT SPECIFICATION

(11) **EP 4 242 452 B1**
(45) Date of publication and mention of the grant of the patent: **04.02.2026**
(21) Application number: 23184111.5
(22) Date of filing: 14.12.2018
(51) Int. Cl.: F03D 7/02, F03D 7/04

(54) **CONTROLLING WIND TURBINE NOISE**
STEUERUNG DES LÄRMS EINER WINDENERGIEANLAGE
RÉGULATION DU BRUIT D'UNE ÉOLIENNE

(30) Priority: 29.12.2017 DK PA201771034
(43) Date of publication of application: 13.09.2023
(62) Divisional of application: 18826945.0
(73) Proprietor: VESTAS WIND SYSTEMS A/S, 8200 Aarhus N (DK)
(72) Inventor: GUPTA, Mranal, 8381 Tilst (DK); MADSEN, Kaj Dam, 8000 Aarhus C (DK); SLOTH, Erik, 8410 Rønde (DK)
(74) Representative: Vestas Patents Department

(56) References cited:
- DE-A1- 102015 008 812
- US-A1- 2012 027 591
- US-A1- 2013 140 818
- US-A1- 2015 115 610

## Description

### Technical Field

The invention relates to systems and methods for controlling the audible level of tonal noise produced by wind turbines in a wind power plant.

### Background

Noise emission from wind turbines is a well-known problem and has been the subject of extensive work. The procedure for measuring wind turbine acoustic noise is described in the third edition of international standard IEC 61400-11.

The noise emission from a wind turbine includes both mechanical noise and aerodynamic noise. Mechanical noise includes noise driven by components within the nacelle, such as the wind turbine drivetrain. Such noise can be radiated to the surroundings directly from the surface of vibrating components (so-called airborne noise) or can be radiated to the surroundings by the wind turbine tower or blades when vibrations of components are conducted through the structure of the wind turbine (so-called structure borne noise (SBN)). Aerodynamic noise comes from the wind turbine blades and includes, for example, noise due to vortex-shedding.

The spectrum of noise produced by a wind turbine includes both broadband noise and noise at distinct frequencies. Noise at distinct frequencies, known as tonal noise, is often perceived as more annoying to wind turbine neighbours and is more likely to be the subject of noise complaints.

While it is desirable to keep the level of audible tonal noise to acceptably low, it is also desirable to keep the power output of the wind power plant high. Typically, the wind turbines of a wind power plant will be operated according to operating parameters that give a high power output while complying with noise and safety requirements.

European Patent Number 2337952 describes systems and methods for controlling the noise emission of wind turbines in wind parks. These methods include measuring wind speed and direction and using these to produce a wind turbine noise emission model for predicting noise as a function of the geographical position of the turbines, the geographical position of a noise emission point and operating parameters of the wind turbines. The operation of wind turbines in the wind park is controlled to prevent the predicted noise from exceeding a predetermined threshold.

The methods described in European Patent Number 2337952 may be well suited to controlling the general noise level emitted by wind turbines, but may not be so well suited to controlling tonal noise levels. This is because it is generally difficult to predict when a wind turbine will produce tonal noise, as tonal noise may result from resonance in one or more components. Further, application of the emission models may reduce the power output of the wind power plant more than is desirable.

International Patent Application with Publication No. WO 2017/198271 A1 describes techniques that use vibration data to identify operating parameters for which a turbine is likely to produce tonal noise. Such operational areas can then be avoided. While these techniques are suited to controlling tonal noise levels produced by a wind turbine, they may still reduce the power output of the wind power plant more than is desirable.

Another example of noise reduction using several wind turbines is disclosed by US 2012/027591 A1.

### Summary of the Invention

Embodiments described herein allow for audible levels of tonal noise produced by a wind power plant to be reduced while limiting an associated reduction in power output.

The invention is defined in the independent claims to which reference should now be made. Preferred features are detailed in the dependent claims.

According to an aspect of the present invention, there is provided a method of controlling audible levels of tonal noise produced by a wind power plant comprising a plurality of wind turbines. The method comprises identifying a wind turbine as contributing to a level of tonal noise that is audible at a noise reception point; and adjusting one or more operating parameters of a wind turbine other than the identified wind turbine in order to reduce a level of tonal noise produced by the identified wind turbine that is audible at the noise reception point, and thereby reduce the level of tonal noise that is audible at the noise reception point.

Methods of tonal noise control that focus on adjusting the operation of the wind turbines that are identified as contributing to tonal noise levels are typically limited to de-rating the individual wind turbines. This can result in a relatively large drop in the power output of the wind power plant. However, by taking into account the affect that one turbine can have on the level of tonal noise that is produced by another turbine, or at least the level of that tonal noise that is audible at a noise reception point such as a power plant neighbour, additional flexibility in tonal noise control is provided, and it may be possible to reduce the audible tonal noise level while avoiding a large drop in power output.

The one or more operating parameters of the wind turbine other than the identified wind turbine may be adjusted in order to change a wind profile at the identified wind turbine, for example the wind speed and/or direction at the identified wind turbine. For a given wind profile, a wind turbine may have a relatively wide operational area in which it produces tonal noise, meaning that significant changes to its operating parameters may be needed to take it out of this 'critical' operational area. This may well be associated with a significant drop in power output. However, the critical area may be quite narrow in terms of the wind profile, so changing the wind profile experienced by a wind turbine may provide a way of reducing the level of tonal noise produced by the wind turbine without significantly reducing its power output. Since the wind profile experienced by a wind turbine may be affected by the surrounding wind turbines (particularly neighbouring turbines and/or upstream wind turbines) due to affects such as shielding, changes to the operating parameters of one or more surrounding wind turbines may reduce tonal noise without a significant drop in the power output of the wind power plant.

Adjusting the one or more operating parameters of a wind turbine other than the identified wind turbine may comprise changing the RPM, power output and/or the blade pitch of a wind turbine that is upwind of the identified wind turbine in order to increase a wind speed at the identified wind turbine. A wind turbine may tend to produce tonal noise when it experiencing a relatively low wind speed, which may be caused by shielding by upwind turbines. Adjusting operating parameters of one or more upwind turbines so that the identified wind turbine sees 'clear' wind may reduce the tonal noise levels produced by the identified wind turbine without a significant drop in the power output of the wind power plant.

The one or more operating parameters of the wind turbine other than the identified wind turbine are adjusted in order to mask tonal noise produced by the identified wind turbine. Tonal noise is characterized by distinct frequencies in the otherwise broadband distribution of noise levels. It may therefore be possible to reduce the level of tonal noise that is audible at the noise reception point by providing additional noise to mask the distinct frequencies. While this may increase the overall noise levels at the noise reception point, this can be acceptable if the resulting noise profile masks the noise at distinct frequencies, which power plant neighbours find more annoying. In some embodiment, the changes to the operating parameters may be made in order to mask a particular tone that is identified as being produced by the identified wind turbine.

The RPM, blade pitch and/or power output of the wind turbine other than the identified wind turbine may be changed in order to mask tonal noise produced by the identified wind turbine. A wind turbine that is rotating faster and/our outputting more power may typically be louder and may therefore be better at masking noise.

Thus, adjusting one or more operating parameters of a wind turbine other than the identified wind turbine may comprise changing the RPM, power output and/or the blade pitch the wind turbine other than the identified wind turbine in order to mask tonal noise produced by the identified wind turbine. Further, adjusting one or more operating parameters of the identified wind turbine may be performed in order to reduce the level of tonal noise produced by the identified wind turbine, and thereby reduce the level of tonal noise that is audible at the noise reception point.

The wind turbine other than the identified wind turbine may be downwind of the identified wind turbine and it is a neighbour of the identified wind turbine. In some cases, it may not be possible to change the wind profile experienced by a wind turbine that has been identified as contributing to tonal noise levels. For example, for a given wind direction, there may be no or only a very limited number of upstream wind turbines of the identified wind turbine. In this case, masking of tones may be particularly useful and downwind turbines, especially downwind neighbours, may provide the best masking.

The method may further comprise adjusting one or more operating parameters of the identified wind turbine in order to reduce the level of tonal noise produced by the identified wind turbine, and thereby reduce the level of tonal noise that is audible at the noise reception point. Adjusting one or more operating parameters of the identified wind turbine may comprise changing the RPM, the blade pitch and/or the power output of the identified wind turbine. While embodiments takes into account the influence of other wind turbines on the level of tonal noise that is produced by an identified wind turbine and is audible at a noise reception point, it may still be beneficial to adjust the operation of the identified turbine. For example, it may be possible to move a turbine out of a critical area of operation using relatively small adjustments of both the identified wind turbine and an upstream wind turbine. On the other hand, to move the identified wind turbine out of the critical area of operation based only on changes to the operating parameters of the identified wind turbine, or based only on changes to the upstream turbine, may require a more significant change.

The method of any preceding claim, further comprising adjusting the operation of one or more auxiliaries, such as cooling fans, of a wind turbine of the wind power plant. In some cases the auxiliaries may also create noise that annoys plant neighbours, and their adjustment may reduce the level of noise that is audible at the noise reception point. Further, noise created by auxiliaries may be used to mask tonal noise produced by one or more wind turbines of the wind power plant.

The adjustment of operating parameters of the wind turbines may be constrained by the power output of the wind power plant, in order to limit a reduction in the power output associated with the adjustment of the operating parameters of the wind turbines. Constraining adjustments in this way ensures that changes to the operating conditions do not come at the cost of power output. This may be particularly important where the wind power plant is presently complying with the power plant's tonality requirements, as in this case it may not be strictly necessary to make any changes to the wind power pant's operation.

Adjusting one or more operating parameters of a wind turbine other than the identified wind turbine may comprise determining a control strategy for reducing the level of tonal noise produced by the identified wind turbine that is audible at the noise reception point, the determination of the control strategy being constrained by the power output of the wind power plant so as to limit a reduction in the power output associated with control strategy. The one or more operating parameters of a wind turbine other than the identified wind turbine may then be adjusted according to the determined control strategy. The control strategy may be a control strategy for moving the operation of a wind turbine out of an operational area in which it is known to emit tonal noise.

The one or more operating parameters may be adjusted in order to move the identified wind turbine out of an operational area in which it is known to produce tonal noise. Such operational areas may be known based on previous use or testing of the wind turbines or their components, such as the gearbox.

Operating parameters may be adjusted in response to determining that the level of tonal noise that is audible at the noise reception point has not complied with a predefined tonal noise requirement of the wind power plant for longer than a predefined length of time. Additionally or alternatively, operating parameters may be adjusted in response to determining that the identified wind turbine has been operating in an operational area in which it is known to produce tonal noise for longer than a predefined length of time. This avoids unnecessary changes to the wind power plant's operation, which may be associated with drops in power output. For example, an increase in the tonal noise level that is audible at the noise reception point may be caused by what is only a brief change in the incident wind speed or direction.

A controller for controlling a wind turbine or a wind power plant is also provided. The controller is configured to carry out the method of controlling audible levels of tonal noise produced by a wind power plant comprising a plurality of wind turbines.

A wind turbine and a wind power plant comprising the controller is also provided.

A computer program which, when executed by a computing device, causes the computing device to carry out the method, such as the method of the first aspect, of controlling audible levels of tonal noise produced by a wind power plant comprising a plurality of wind turbines is also provided.

### Brief Description of the Drawings

Examples will now be described in more detail with reference to the accompanying drawing in which:
Figure 1 illustrates a large modern wind turbine;
Figure 2 illustrates a simplified cross section of a nacelle, as seen from the side;
Figure 3 is a perspective view of a landscape with a wind power plant;
Figure 4 is a flow chart illustrating a method of controlling audible levels of tonal noise produced by a wind power plant comprising a plurality of wind turbines; and
Figure 5 illustrates exemplary noise data showing noise that is audible at a noise reception point.

Like reference numbers are used for like elements throughout the description and figures.

### Detailed Description of Preferred Embodiments

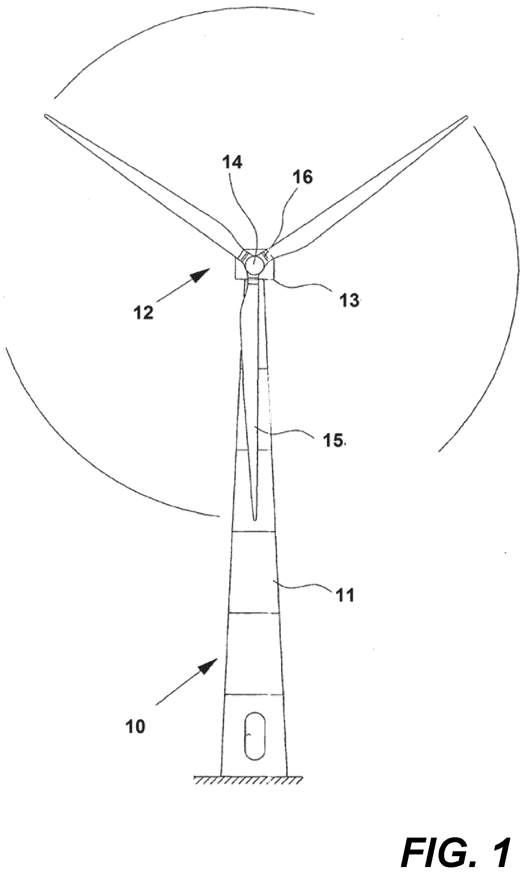

Figure 1 illustrates a large modern wind turbine 10 as known in the art, comprising a tower 11 and a wind turbine nacelle 13 positioned on top of the tower. Wind turbine blades 15 of a turbine rotor 12 are mounted on a common hub 14 which is connected to the nacelle 13 through the low speed shaft extending out of the nacelle front. The wind turbine blades 15 of the turbine rotor 12 are connected to the hub 14 through pitch bearings 16, enabling the blades to be rotated around their longitudinal axis. The pitch angle of the blades 15 can then be controlled by linear actuators, stepper motors or other means for rotating the blades. The illustrated wind turbine 10 has three turbine blades 15, but it will be appreciated that the wind turbine could have another number of blades such as one, two, four, five or more.

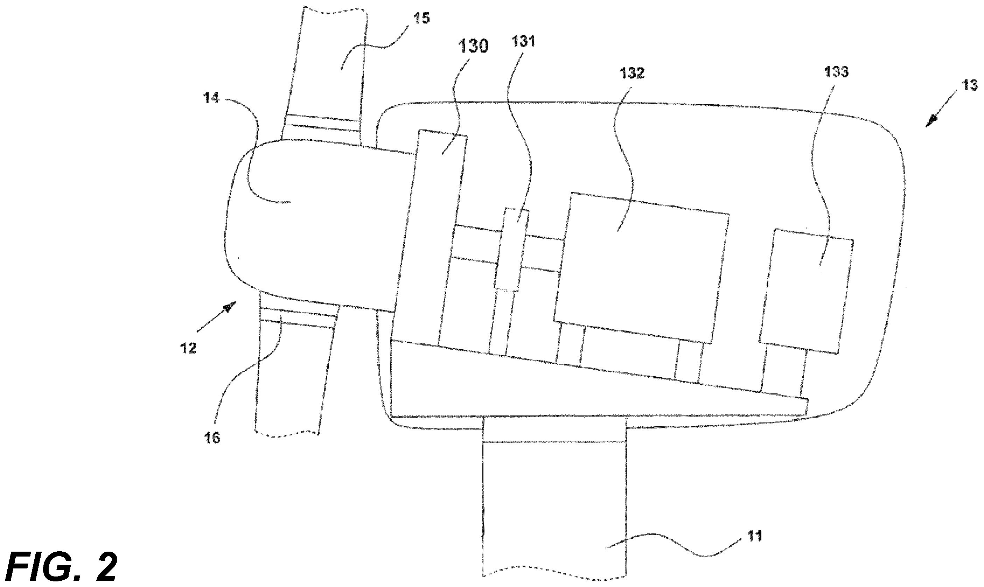

Figure 2 illustrates a simplified cross section of a nacelle 13 of a wind turbine 10, as seen from the side. The nacelle 13 exists in a multitude of variations and configurations but in most cases comprises one or more of following components: a gearbox 131, a coupling (not shown), some sort of braking system 132 and a generator 133. A nacelle can also include a converter 134 (also called an inverter) and additional peripheral equipment such as further power handling equipment, control cabinets, hydraulic systems, cooling systems and more.

A wind turbine such as wind turbine 10 operates according to a set of operating parameters. Some operating parameters, such as the wind speed and direction, are independent of the wind turbine 10. Other operating parameters, such as the RPM, torque, blade pitch angle and power output may be set by a controller, as explained in more detail below. Through testing and use of the wind turbine 10 (or similar models), the relationships between the operating parameters are usually known to some extent. For example, for a given wind speed and wind direction, the power output may be known as a function of blade pitch, RPM and torque. This allows a wind turbine 10 that is experiencing a given set of fixed operating parameters (such as wind speed and wind direction) to be operated using a set of variable operating parameters (such as blade pitch, RPM and torque) that provide a high power output.

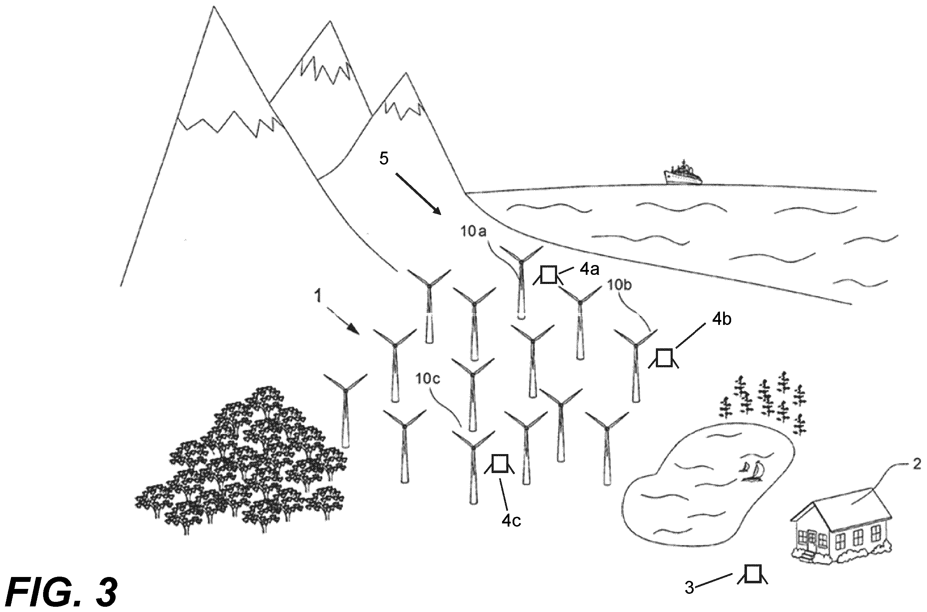

Figure 3 illustrates a wind power plant 1 that includes a plurality of wind turbines 10a, 10b, 10c in accordance with embodiments of the present invention. The wind power plant 1 is located relatively near to a plant neighbour 2, who may be affected by noise, including tonal noise, produced by the wind power plant.

As noted above, the wind turbines 10a, 10b, 10c of the wind power plant 1 operate according to operating parameters. These operating parameters are typically set by one or more controllers (not shown in Figure 3). For example, each wind turbine 10a-c may have its own turbine controller which is in communication with a central plant controller. The individual turbine controllers may then be responsible for setting the operating parameters of the associated turbines 10a-c based on parameters received from the plant controller.

The turbine controllers may also be responsible for communicating data to the plant controller so that the plant controller can determine appropriate parameters for the turbines 10a-c. For example, the individual turbine controllers may communicate the current operating parameters of their associated turbine to the plant controller, along with various other data, such as data from sensors associated with the turbines. Exemplary sensors include wind speed and direction sensors, vibration sensors, sensors associated with a Condition Monitoring System (CMS) of the wind turbine, and microphones 4a, 4b, 4c, although some or all of these sensors can be independent of a turbine, and could be coupled directly to the plant controller. Based on this data and the known relationships between the operating parameters, the plant controller determines operating parameters for the turbines 10a-c and communicates these to the individual turbine controllers.

Generally speaking, it is desirable to operate the wind turbines 10a-c of the wind power plant 1 using operating parameters that provide the maximum power output that comply with other operational requirements of the wind power plant. These other operational requirements will typically include safety requirements, which will vary according to wind conditions, for example, and noise requirements, which will vary according to the country in which the power plant 1 is located (different countries permit different noise levels), the location of the wind power plant (taking into account the distance to the nearest neighbour 2, for example) and the time of day (noise requirements may be stricter at night so that neighbours' sleep is not disturbed, for example).

The operating parameters of one or more of the wind turbines 10a-c of the wind power plant 1 will sometimes need to be adjusted in order to comply with the plant's noise requirements. For example, if a microphone that is located at a noise reception point 3 at or near to the plant neighbour 2 measures a noise level that does not comply with the plant's noise requirements, the plant controller may take action by adjusting the operating parameters of one or more of the turbines 10a-c. As another example, a noise level measured by a microphone 4a, 4b, 4c located at or near a turbine 10a, 10b, 10c may indicate that a turbine is emitting a lot of noise, in which case the plant controller may take action.

Attempts to reduce noise levels often involve reducing the power output of the wind power plant 1. This is because, generally speaking, there is a positive correlation between the power output of the wind turbines 10a-c and the overall level of noise that they emit.

However, this correlation between power output and noise level does not necessarily apply to tonal noise, which will often occur within a relatively narrow set of operating conditions (a 'critical' area of operation), possibly due to resonant vibrations in one or more components of a wind turbine 10a-c. In view of this, by modifying a turbine's operating parameters so that it moves outside of a critical area of operation, it may be possible to reduce the tonal noise produced by the wind turbine, and thereby reduce the level of tonal noise that is audible at a noise reception point 3, without drastically reducing the power output of the turbine and wind power plant. For example, International Patent Application Publication No. WO 2017/198271 A1 describes the use of vibration data in determining critical areas of operation of a wind turbine so that the critical areas of operation can be avoided. Knowledge of these critical areas of operation could be used to reduce the level of tonal noise emitted by a wind turbine without significantly affecting its power output.

While this represents an improvement over techniques which simply reduce the power output of one or more turbines 10a, 10b, 10c to reduce noise levels, embodiments described herein provide further improvements. In particular, rather than only adjusting the operating parameters of wind turbines that are identified as emitting tonal noise, embodiments described herein take a plant-level approach that focusses on reducing the overall level of tonal noise that is audible at a noise reception point 3. In doing so, embodiments take into account the affect that a wind turbine can have on the level of tonal noise emitted by another wind turbine, and/or on the level of tonal noise emitted by another wind turbine that is audible at a noise reception point.

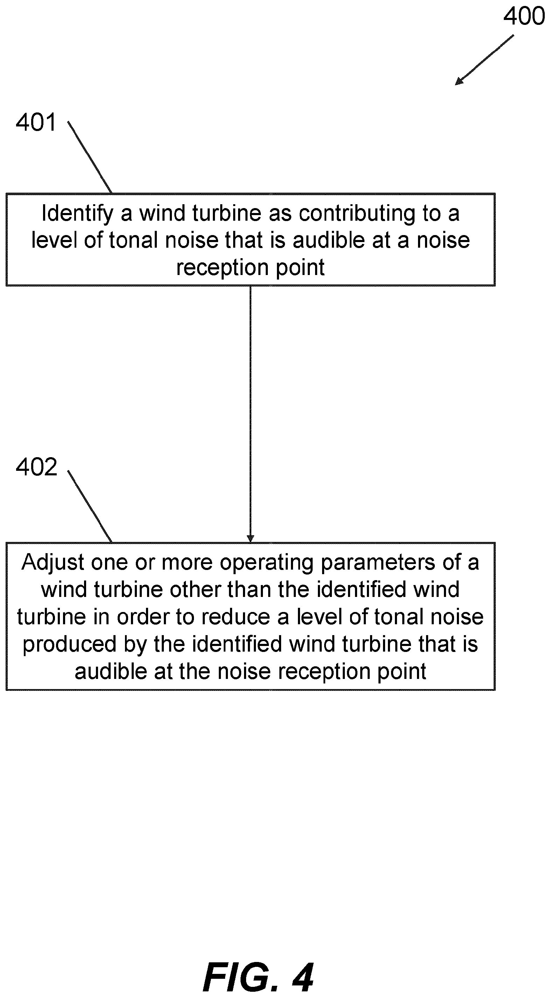

To this end, Figure 4 is a flow chart illustrating a method 400 of controlling audible levels of tonal noise produced by a wind power plant 1 comprising a plurality of wind turbines 10a-c.

According to the method 400, a wind turbine is identified 401 as contributing to a level of tonal noise that is audible at a noise reception point 3. The identification 401 may be performed by a turbine controller, a plant controller, or by another computer.

The noise reception point 3 will typically be at or near to a wind turbine neighbour 2. This is because the present invention is typically concerned with ensuring that a wind power plant 1 complies with wind power plant noise requirements, and wind power plant noise requirements are often based on the level of noise that is audible by neighbour of the wind power plant. In principle, however, the noise reception point 3 could be any point at which wind turbine noise may be audible.

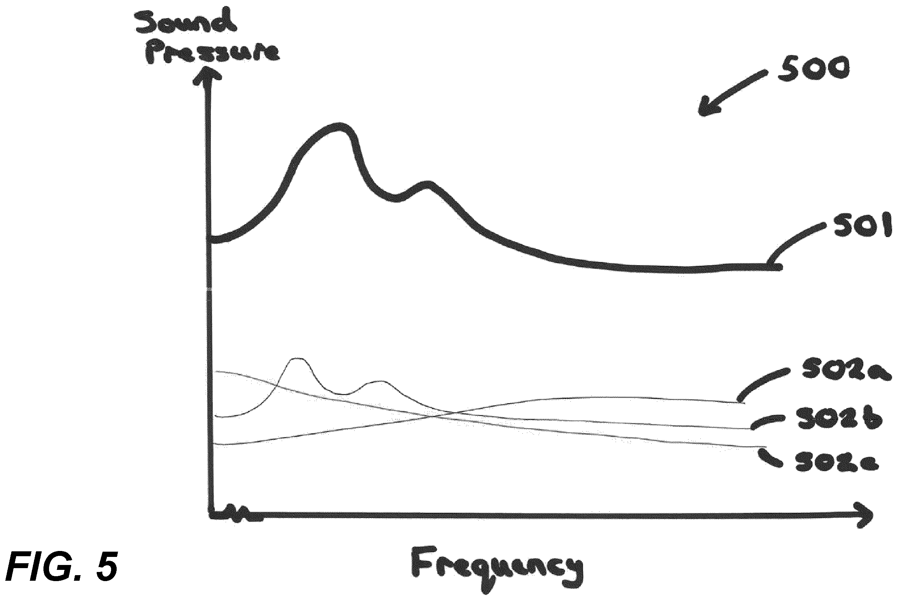

The wind turbine can be identified as contributing to the audible level of tonal noise at the noise reception point in any of a number of different ways. An example is illustrated in Figure 5. Figure 5 is a graph 500 of sound pressure as a function of frequency. The line 501 represents the total sound pressure that is audible at the noise reception point 3, and as can be seen from the distinct peaks in the other otherwise broadband spectrum, includes tonal noise. The other lines 502a-c represent the individual contributions of three wind turbines 10a-c to the total sound pressure 501. As there are distinct peaks in line 502b that approximately correspond to the distinct peaks in the total sound pressure 501, one of the wind turbines 10b can be identified as contributing to the level of tonal noise that is audible at the noise reception point. It will be appreciated that the wind turbine 10b could have been identified as contributing to the audible tonal noise level at the noise reception point 3 based only on line 502b, without comparing it to the overall noise level 501. It will also appreciated that there may be various other criteria for identifying a turbine as contributing to the level of tonal noise that is audible at the noise reception point 3. For example, a sound pressure threshold or a threshold deviation in the sound pressure may be used to identify a turbine as contributing to the level of tonal noise at the noise reception point 3.

In other examples, rather than or in addition to using noise measurements/models, a turbine may be identified based on a determination that the turbine is operating within, or is predicted to operate within, a known critical area of operation in which it is know that the turbine emits tonal noise. In some embodiments, a turbine may be identified based on predicted wind conditions at the turbine. For example, based on wind conditions measured at the leading turbine(s) of the plant 1 or at a met mast, and based on previous experience and/or simulations (such as CFD - Computational Fluid Dynamics), wind conditions at the downwind turbines may be estimated. Based on the estimated wind conditions at a downwind turbine, the turbine may then be identified as a candidate for producing tonal noise. For example, it may be determined that if the downwind turbine operates at its current operating conditions (such as RPM, blade pitch, torque and power output) and experiences the estimated wind conditions, it will be operating within a critical operational area and will therefore be likely to produce tonal noise.

It will also be appreciated that while Figure 5 only shows the contributions 502a-c of three wind turbines 10a-c to the overall noise level 501 that is audible at the noise reception point 3, and only one turbine 10b contributes to the level of tonal noise that is audible at the noise reception point 3, this is for ease of illustration. There can be more or less wind turbines contributing to the overall noise level 501, and more than one wind turbine may be identified as contributing to the level of tonal noise that is audible at the noise reception point 3.

The individual contributions 502a-c to the overall noise level 501 made by the individual wind turbines 10a-c can be determined in a number of ways. For example, microphones 4a-c may be located in the vicinity of the wind turbines 10a-c and measure the sound pressure in the vicinity of the wind turbines 10a-c. Starting from the sound pressures measured by the microphones 4a-c, corresponding audible noise levels 501a-c can be approximated using a noise propagation model, such as the Nord 2000 noise propagation model. In other cases, rather than using microphones 4a-c to measure the noise emitted by the wind turbines 10a-c, vibration levels of components of the wind turbines 10a-c can be measured using vibration sensors, and corresponding noise levels can be estimated, as described in International Patent Application Publication No. WO 2017/198271 A1. These estimated noise levels can be converted to corresponding audible noise levels 501a-c using a noise propagation model, such as the Nord 2000 model.

The overall sound pressure 501 that is audible at the noise reception point 3 can also be determined in a number of ways. In one example, a microphone located at or near to the noise reception point 3 measures the noise level that is audible at the noise reception point. In another example, microphones 4a-c measure the noise emitted by the wind turbines 10a-c, and these measures are propagated to the noise reception point 3 using a noise propagation model such as the Nord 2000 mode. The propagated noise levels can then combined to give an overall noise level. In a further example, vibration levels of components of the wind turbines 10a-c can be measured using vibration sensors, and corresponding noise levels can be estimated, as described in International Patent Application Publication No. WO 2017/198271 A1. These estimated noise levels can be converted to corresponding audible noise levels 501a-c using a noise propagation model, such as the Nord 2000 model. The propagated noise levels can then combined to give an overall noise level.

Returning to Figure 4, having identified a wind turbine 10b as contributing to a level of tonal noise that is audible at a noise reception point 3, one or more operating parameters of one or more wind turbines that are different than the identified wind turbine are adjusted 402. This adjustment is to reduce a level of tonal noise that is produced by the identified wind turbine 10b audible at the noise reception point 3. The one or more wind turbine operating parameters that are adjusted 402 can include the RPM, torque, power output and blade pitch, or any combination thereof.

In some cases, the wind turbine operating parameters of the different wind turbines are adjusted in order to change the wind profile that is experienced by the identified wind turbine 10b. For example, operating parameters of other wind turbines (such as turbine 10a) are adjusted in order to change the properties of the wind, such as wind speed and wind direction, that is arriving at the identified wind turbine 10b. This may have the effect of reducing the level of tonal noise that is emitted by the identified wind turbine 10b, and thereby also reduce the level of tonal noise that is audible at the noise reception point 3. Moreover, it may achieve this reduction in the level of tonal noise emitted by the identified turbine 10b with a smaller reduction in power output of the power plant 1 than could be achieved solely by changing the operating parameters of the identified wind turbine 10b.

In particular, as noted above, a wind turbine 10b may emit tonal noise when it is operating within a set of critical operating parameters. This critical set of operating parameters will typically be narrower for some operating parameters than for others. For example, the critical set of operating parameters may cover a relatively wide range of RPM values, but only a relatively narrow range of torque values. In some cases, the critical set of operating parameters may be relatively narrow in terms of the wind profile the turbine experiences. That is, it may be possible to achieve a significant drop in the level of tonal noise emitted by an identified turbine 10b if the wind speed experienced by the identified turbine 10b could be increased by only a small amount.

The wind profile experienced by the identified wind turbine is independent of the identified wind turbine, and so cannot be adjusted by adjusting operating parameters of the identified wind turbine 10b. However, the wind profile may not be independent of the operating parameters of other wind turbines in the wind power plant 1. For example, if the wind direction is along the direction indicated by arrow 5 in Figure 3, the identified turbine 10b will, to some extent, be shielded from the wind by the upwind turbine 10a. The wind properties experienced by the identified turbine 10b may then depend on the operating parameters of the upwind turbine 10a. Therefore, changing operating parameters such as the torque, RPM and/or blade pitch of the upwind turbine 10a may lead to a change in the wind profile (such as increased wind speed) at the identified turbine which moves the identified wind turbine 10b away from a critical area of operation so that it emits less tonal noise. In some cases, the drop, if any, in the power output of the other wind turbines (such as turbine 10a) may be less than the drop in power output of the identified wind turbine 10b that would result from solely changing the operating parameters of the identified wind turbine.

Alternatively or additionally to adjusting the operating parameters of other wind turbines in order to change the wind profile at the identified wind turbine 10b, one or more operating parameters of one or more wind turbines that are different than the identified wind turbine 10b may be adjusted in order to mask the tonal noise emitted by the identified wind turbine 10b. That is, rather than only focusing on reducing the level of tonal noise emitted by the identified turbine 10b, other turbines (such as turbine 10a) may be used to mask the tonal noise emitted by the identified turbine 10b, and thereby reduce the level of tonal noise that is audible at the noise reception point 3.

It will be appreciated that providing masking noise or energy may result in an increase in to the overall noise level (sound pressure) that is audible at the noise reception point 3. However, this can still result in a reduction in the level of tonal noise that is audible a the noise reception point 3, and in many cases it is the level of audible tonal noise that is important because wind power plant neighbours 2 often find tonal noise more annoying. For example, referring to Figure 5, if masking noise can be provided so as to obscure the distinct peaks of line 501 within a higher level of broadband noise, power plant neighbours 2 may find the noise that they can hear less annoying.

The one or more wind turbine operating parameters that are adjusted 402 can include the RPM, torque, power output and blade pitch, or any combination thereof. In some cases, the operating parameters may be adjusted so as to mask one or more particular tones that have been identified in the tonal noise emitted by the identified turbine 10b. The operating parameters of one or more neighbouring turbines are adjusted so that they emit a higher level of noise (broadband noise, for example) in the frequencies around an identified tone, in order to mask the tone. As another example, operating parameters (of the identified turbine or other turbines) may be adjusted so that noise originating from one or more particular components of a turbine, such as a hydraulic power unit, gears or generator, masks a particular identified tone.

The most effective masking of the tonal noise emitted by the identified turbine 10b may be provided by the turbines that are downwind of and/or neighbour the identified turbine 10b. While embodiments described herein involve modifying the operating parameters of wind turbines other than an identified wind turbine in order to reduce the level of tonal noise emitted by the identified turbine and that that is audible at a noise reception point 3, embodiments may also involve modifying the operating parameters of identified wind turbines. In some cases the best results, in terms of reducing the audible level of tonal noise while limiting a reduction in power output of the wind power plant 1, will be achieved by adjusting the operating parameters of both the identified wind turbine and other wind turbines. For example, if a wind turbine is identified as contributing to a tonal noise at a noise reception point, operating parameters of the identified wind turbine may be adjusted to move its operation away from a critical area, and at the same time operating parameters of an upwind turbine may be adjusted to change the wind profile at the identified turbine in order to move the identified wind's operation further away from the critical area. At the same time, operating parameters of a downwind turbine may be modified in order to produce masking energy to mask the tonal noise emitted by the identified turbine. Overall, the reduction in power output may be less than is possible by only adjusting the operating parameters of the identified wind turbine.

Other plant-level measures can be taken to mask the tonal noise emitted by the identified wind turbine(s) 10b, to reduce the level of tonal noise emitted by a turbine, and to reduce the general level of noise emitted by the wind power plant. For example, gurney flaps or loudspeakers of the identified turbine 10b or other turbines could be used to provide masking noise. The operation of turbine auxiliaries, such as cooling fans, lubrication pumps and hydraulic pressure units may also be changed to provide masking noise or if they are themselves causing annoying noise.

Changes to the operating parameters of the turbines (including both the identified turbine and turbines other than the identified turbine) may be constrained by the power output of the wind power plant 1. For example, the plant controller may consider multiple different possible adjustments to operating parameters and select adjustment which, at a plant level, provide the best power output while reducing the tonal noise that is audible at the noise reception point. As noted above, through testing and previous use, the power output of the wind turbines (and therefore the power plant) as a function of the various operating parameters is usually known to some extent, and so the controller can use the plant power output to constrain the changes.

In some embodiments, a controller may determine a control strategy for adjusting operating parameters. For example, the plant controller may determine that an identified wind turbine is operating within a critical area of operation for which it is known to emit tonal noise, and then determine a control strategy for moving the identified turbine outside of the critical area of operation. In doing so, the controller may constrain changes to operating parameters (of both the identified turbine and turbines other than the identified turbine) based on the power output of the wind power plant.

A wind turbine may be identified 401 as contributing to a level of tonal noise audible at the noise reception point 3, or operating parameters may be adjusted 402, in response to determining that the wind power plant 1 does not comply with a noise requirement of the wind power plant 3. Preferably, the plant controller will not adjust operating parameters of the turbines unless the wind power plant 1 has not met the noise requirement for at least a predetermined amount of time. This way, operating parameters of the turbines are not changed unnecessarily, for example due to a brief changes in wind conditions which may subside relatively quickly. A suitable amount of time can be chosen by the plant operator but could, for example, be greater than about 30 seconds or one minute.

While embodiments have been described for a single noise reception point 3, it will be appreciated that it could also be performed for multiple reception points, such as for multiple neighbours of the wind power plant.

Described above are a number of embodiments with various optional features. It should be appreciated that, with the exception of any mutually exclusive features, any combination of one or more optional features are possible.

## Claims

1. A method of controlling audible levels of tonal noise produced by a wind power plant comprising a plurality of wind turbines, the method comprising:
- identifying a wind turbine as contributing to a level of tonal noise that is audible at a noise reception point; and
- adjusting one or more operating parameters of a wind turbine other than the identified wind turbine in order to mask tonal noise produced by the identified wind turbine that is audible at the noise reception point, and thereby reduce the level of tonal noise that is audible at the noise reception point, wherein the wind turbine other than the identified wind turbine is a neighbour of the identified wind turbine and wherein the one or more operating parameters of the neighbour wind turbine are adjusted so that the neighbour wind turbine emits a higher level of noise in frequencies around the tonal noise.

2. The method of claim 1, wherein one or more operating parameters of the wind turbine other than the identified wind turbine are adjusted in order to change a wind profile at the identified wind turbine.

3. The method of claim 2, wherein the one or more operating parameters of the wind turbine other than the identified wind turbine are adjusted in order to change the wind speed at the identified wind turbine.

4. The method of any preceding claim, wherein the wind turbine other than the identified wind turbine is upwind of the identified wind turbine.

5. The method of any preceding claim, wherein adjusting the one or more operating parameters of a wind turbine other than the identified wind turbine comprises changing the RPM, power output and/or the blade pitch of a wind turbine that is upwind of the identified wind turbine in order to increase a wind speed at the identified wind turbine.

6. The method of claim 1, wherein the RPM, blade pitch and/or power output of the wind turbine other than the identified wind turbine are changed in order to mask tonal noise produced by the identified wind turbine.

7. The method of any preceding claim, further comprising adjusting the operation of one or more auxiliaries of a wind turbine of the wind power plant.

8. The method of any preceding claim, wherein the adjustment of operating parameters of the wind turbines is constrained by the power output of the wind power plant, in order to limit a reduction in the power output associated with the adjustment of the operating parameters of the wind turbines.

9. The method of any preceding claim, wherein adjusting one or more operating parameters of a wind turbine other than the identified wind turbine comprises:
- determining a control strategy for reducing the level of tonal noise produced by the identified wind turbine that is audible at the noise reception point, the determination of the control strategy being constrained by the power output of the wind power plant so as to limit a reduction in the power output associated with control strategy; and
- adjusting one or more operating parameters of a wind turbine other than the identified wind turbine according to the determined control strategy.

10. The method of any preceding claim, wherein the one or more operating parameters are adjusted in order to move the identified wind turbine out of an operational area in which it is known to produce tonal noise.

11. The method of any preceding claim, wherein operating parameters are adjusted in response to determining that the level of tonal noise that is audible at the noise reception point has not complied with a predefined tonal noise requirement of the wind power plant for longer than a predefined length of time.

12. The method of any preceding claim, wherein operating parameters are adjusted in response to determining that the identified wind turbine has been operating in an operational area in which it is known to produce tonal noise for longer than a predefined length of time.

13. A controller for controlling a wind turbine or a wind power plant, the controller being configured to carry out the method of any of claims 1 to 12.

14. A wind turbine comprising the controller of claim 13.

15. A wind power plant comprising a controller according to claim 13.

## Patentansprüche

1. Verfahren zum Steuern von hörbaren Pegeln von tonalem Lärm, der von einem Windpark erzeugt wird, der eine Vielzahl von Windkraftanlagen umfasst, wobei das Verfahren Folgendes umfasst:
- Identifizieren einer Windkraftanlage als Beitragende zu einem Pegel von tonalem Lärm, der an einem Lärmempfangspunkt hörbar ist; und
- Anpassen eines oder mehrerer Betriebsparameter einer anderen Windkraftanlage als der identifizierten Windkraftanlage, um den von der identifizierten Windkraftanlage erzeugten und am Geräuschempfangspunkt hörbaren tonalen Lärm zu verschleiern und dadurch den am Geräuschempfangspunkt hörbaren tonalen Lärm zu verringern, wobei die andere Windkraftanlage als die identifizierte Windkraftanlage ein Nachbar der identifizierten Windkraftanlage ist und wobei der eine oder die mehreren Betriebsparameter der benachbarten Windkraftanlage so eingestellt werden, dass die benachbarte Windkraftanlage einen höheren Geräuschpegel in Frequenzen um den tonalen Lärm herum aussendet.

2. Verfahren nach Anspruch 1, wobei ein oder mehrere Betriebsparameter der anderen Windkraftanlage als der identifizierten Windkraftanlage eingestellt werden, um ein Windprofil an der identifizierten Windkraftanlage zu verändern.

3. Verfahren nach Anspruch 2, wobei der eine oder die mehreren Betriebsparameter der anderen Windkraftanlage als der identifizierten Windkraftanlage eingestellt werden, um die Windgeschwindigkeit an der identifizierten Windkraftanlage zu verändern.

4. Verfahren nach einem vorstehenden Anspruch, wobei die andere Windkraftanlage als die identifizierte Windkraftanlage windwärts der identifizierten Windkraftanlage ist.

5. Verfahren nach einem vorstehenden Anspruch, wobei Einstellen des einen oder der mehreren Betriebsparameter einer anderen Windkraftanlage als der identifizierten Windkraftanlage Ändern der U/min, Ausgangsleistung und/oder Blattwinkelverstellung einer Windkraftanlage umfasst, die windwärts der identifizierten Windkraftanlage ist, um eine Windgeschwindigkeit an der identifizierten Windkraftanlage zu erhöhen.

6. Verfahren nach Anspruch 1, wobei die U/min, Blattwinkelverstellung und/oder Ausgangsleistung der anderen Windkraftanlage als der identifizierten Windkraftanlage geändert werden, um tonalen Lärm zu verschleiern, der von der anderen Windkraftanlage als der identifizierten Windkraftanlage erzeugt wird.

7. Verfahren nach einem vorstehenden Anspruch, das weiter Einstellen des Betriebs einer oder mehrerer Hilfseinrichtungen einer Windkraftanlage des Windparks umfasst.

8. Verfahren nach einem vorstehenden Anspruch, wobei die Einstellung von Betriebsparametern der Windkraftanlagen durch die Ausgangsleistung des Windparks eingeschränkt wird, um eine Verringerung der Ausgangsleistung, die der Einstellung der Betriebsparameter der Windkraftanlagen zugeordnet ist, zu begrenzen.

9. Verfahren nach einem vorstehenden Anspruch, wobei die Einstellung von einem oder mehreren Betriebsparametern einer anderen Windkraftanlage als der identifizierten Windkraftanlage Folgendes umfasst:
- Bestimmen einer Steuerungsstrategie zum Verringern des Pegels von tonalem Lärm, der durch die identifizierte Windkraftanlage erzeugt wird, der an dem Lärmempfangspunkt hörbar ist, wobei die Bestimmung der Steuerungsstrategie durch die Ausgangsleistung des Windparks eingeschränkt wird, um eine Verringerung der Ausgangsleistung, die der Steuerungsstrategie zugeordnet ist, zu begrenzen; und
- Einstellen von einem oder mehreren Betriebsparametern einer anderen Windkraftanlage als der identifizierten Windkraftanlage gemäß der bestimmten Steuerungsstrategie.

10. Verfahren nach einem vorstehenden Anspruch, wobei der eine oder die mehreren Betriebsparameter eingestellt werden, um die identifizierte Windkraftanlage aus einem Betriebsbereich zu bewegen, in dem bekannt ist, dass tonaler Lärm erzeugt wird.

11. Verfahren nach einem vorstehenden Anspruch, wobei Betriebsparameter infolge eines Bestimmens eingestellt werden, dass der Pegel von tonalem Lärm, der an dem Lärmempfangspunkt hörbar ist, länger als eine vorbestimmte Zeitdauer eine vordefinierte Anforderung an tonalen Lärm des Windparks nicht erfüllt hat.

12. Verfahren nach einem vorstehenden Anspruch, wobei Betriebsparameter infolge eines Bestimmens eingestellt werden, dass die identifizierte Windkraftanlage länger als eine vorbestimmte Zeitdauer in einem Betriebsbereich betrieben wurde, in dem bekannt ist, dass tonaler Lärm erzeugt wird.

13. Steuereinheit zum Steuern einer Windkraftanlage oder eines Windparks, wobei die Steuereinheit dazu konfiguriert ist, das Verfahren nach einem der Ansprüche 1 bis 12 durchzuführen.

14. Windkraftanlage, die die Steuereinheit nach Anspruch 13 umfasst.

15. Windpark, der eine Steuereinheit nach Anspruch 13 umfasst.

## Revendications

1. Procédé de régulation de niveaux audibles de bruit tonal produit par un parc éolien comprenant une pluralité d'éoliennes, le procédé comprenant :
- l'identification d'une éolienne comme contribuant à un niveau de bruit tonal qui est audible à un point de réception de bruit ; et
- l'ajustement d'un ou plusieurs paramètres de fonctionnement d'une éolienne autre que l'éolienne identifiée afin de masquer le bruit tonal produit par l'éolienne identifiée qui est audible au point de réception de bruit, et ainsi réduire le niveau de bruit tonal qui est audible au point de réception de bruit, dans lequel l'éolienne autre que l'éolienne identifiée est une éolienne voisine de l'éolienne identifiée et dans lequel les un ou plusieurs paramètres de fonctionnement de l'éolienne voisine sont ajustés de sorte que l'éolienne voisine émette un niveau de bruit plus élevé dans des fréquences autour du bruit tonal.

2. Procédé selon la revendication 1, dans lequel un ou plusieurs paramètres de fonctionnement de l'éolienne autre que l'éolienne identifiée sont ajustés afin de changer un profil du vent au niveau de l'éolienne identifiée.

3. Procédé selon la revendication 2, dans lequel les un ou plusieurs paramètres de fonctionnement de l'éolienne autre que l'éolienne identifiée sont ajustés afin de changer la vitesse du vent au niveau de l'éolienne identifiée.

4. Procédé selon une quelconque revendication précédente, dans lequel l'éolienne autre que l'éolienne identifiée est face au vent par rapport à l'éolienne identifiée.

5. Procédé selon une quelconque revendication précédente, dans lequel l'ajustement des un ou plusieurs paramètres de fonctionnement d'une éolienne autre que l'éolienne identifiée comprend le changement du régime, de la sortie de puissance et/ou du calage des pales d'une éolienne qui est face au vent par rapport à l'éolienne identifiée afin d'augmenter une vitesse du vent au niveau de l'éolienne identifiée.

6. Procédé selon la revendication 1, dans lequel le régime, le calage des pales et/ou la sortie de puissance de l'éolienne autre que l'éolienne identifiée sont changés afin de masquer un bruit tonal produit par l'éolienne identifiée.

7. Procédé selon une quelconque revendication précédente, comprenant en outre l'ajustement du fonctionnement d'un ou plusieurs auxiliaires d'une éolienne du parc éolien.

8. Procédé selon une quelconque revendication précédente, dans lequel l'ajustement de paramètres de fonctionnement des éoliennes est contraint par la sortie de puissance du parc éolien, afin de limiter une réduction de la sortie de puissance associée à l'ajustement des paramètres de fonctionnement des éoliennes.

9. Procédé selon une quelconque revendication précédente, dans lequel l'ajustement d'un ou plusieurs paramètres de fonctionnement d'une éolienne autre que l'éolienne identifiée comprend :
- la détermination d'une stratégie de commande pour réduire le niveau de bruit tonal produit par l'éolienne identifiée qui est audible au point de réception de bruit, la détermination de la stratégie de commande étant contrainte par la sortie de puissance du parc éolien afin de limiter une réduction de la sortie de puissance associée à la stratégie de commande ; et
- l'ajustement d'un ou plusieurs paramètres de fonctionnement d'une éolienne autre que l'éolienne identifiée selon la stratégie de commande déterminée.

10. Procédé selon une quelconque revendication précédente, dans lequel les un ou plusieurs paramètres de fonctionnement sont ajustés afin de déplacer l'éolienne identifiée hors d'une zone opérationnelle dans laquelle il est connu qu'elle produit un bruit tonal.

11. Procédé selon une quelconque revendication précédente, dans lequel des paramètres de fonctionnement sont ajustés en réponse à la détermination que le niveau de bruit tonal qui est audible au point de réception de bruit n'a pas été conforme à une exigence de bruit tonal prédéfini du parc éolien pendant plus longtemps qu'une durée prédéfinie.

12. Procédé selon une quelconque revendication précédente, dans lequel des paramètres de fonctionnement sont ajustés en réponse à la détermination que l'éolienne identifiée a fonctionné dans une zone opérationnelle dans laquelle il est connu qu'elle produit un bruit tonal pendant plus longtemps qu'une durée prédéfinie.

13. Dispositif de commande pour commander une éolienne ou un parc éolien, le dispositif de commande étant configuré pour réaliser le procédé selon l'une quelconque des revendications 1 à 12.

14. Éolienne comprenant le dispositif de commande selon la revendication 13.

15. Parc éolien comprenant un dispositif de commande selon la revendication 13.
